# FASCICULE DE BREVET EUROPEEN

(11) **EP 2 556 553 B1**
(45) Date de publication et mention de la délivrance du brevet: **15.06.2016**
(21) Numéro de dépôt: 11719854.9
(22) Date de dépôt: 08.04.2011
(51) Int. Cl.: H01M 8/02, H01M 8/04, H01M 8/10, H01M 8/24

(54) **CONVERTISSEUR ELECTROCHIMIQUE PERFECTIONNE**
VERBESSERTER ELEKTROCHEMISCHER WANDLER
IMPROVED ELECTROCHEMICAL CONVERTER

(30) Priorité: 08.04.2010 FR 1052660
(43) Date de publication de la demande: 13.02.2013
(73) Titulaire: Pragma Industries, 64210 Bidart (FR)
(72) Inventeur: FORTE, Pierre, F-64100 Bayonne (FR); LEPILLER, Catherine, F-64210 Ahetze (FR)
(74) Mandataire: Ipside
(86) Numéro de dépôt international: PCT/FR2011/050798
(87) Numéro de publication internationale: WO 2011/124863

(56) Documents cités:
- WO-A2-2006/075119
- JP-A- 2003 264 003
- US-A- 5 863 672
- US-A1- 2002 076 597

## Description

La présente invention concerne un convertisseur électrochimique de type pile à combustible perfectionné.

Le document EP1 846 976 A1 décrit un convertisseur électrochimique à membrane protonique comportant une pluralité de cellules électrochimiques reliées en série qui comporte un premier substrat, sous forme d'une bande continue allongée selon un axe longitudinal et des seconds substrats sous forme de segments de bande, le premier substrat comportant une première face, sur laquelle est réalisée une succession de premiers dépôts formant une série d'anodes espacées, et une seconde face, sur laquelle est réalisée une succession de seconds dépôts formant une série de cathodes espacées disposées en regard desdites anodes, lesdites anodes et cathodes formant une succession de cellules électrochimiques unitaires, le premier substrat étant pourvu d'une succession de traversées de passage des seconds substrats, les seconds substrats étant dimensionnés pour réaliser une piste de connexion entre une cathode d'une cellule unitaire et une anode d'une cellule unitaire adjacente.

Dans ce convertisseur la suppression des plaques dipolaires permet un gain important de masse, une simplification et une augmentation de la densité énergétique de la pile à combustible et permet d'enrouler la pile sur elle même.

Cette augmentation de densité a toutefois un revers à savoir une difficulté accrue pour refroidir la pile.

La présente invention vise à pallier ce problème et propose pour ce faire un convertisseur électrochimique à membrane protonique comportant une pluralité de cellules électrochimiques reliées en série et disposées sur une bande porteuse allongée selon un axe longitudinal, que l'on appellera par la suite bande porteuse, dont une première face présentant des anodes reçoit de l'hydrogène et dont une seconde face présentant des cathodes reçoit de l'air, pour lequel l'hydrogène circule selon un flux parallèle à l'axe longitudinal de ladite bande et en ce que de l'air circule selon un flux transversal à l'axe longitudinal de ladite bande, des moyens de séparation divisant le flux d'air en un flux de refroidissement sans contact avec les cathodes et un flux de réaction cathodique en contact avec les cathodes.

Préférablement, les moyens de séparation sont constitués par un film ondulé dont les ondulations sont disposées perpendiculairement à l'axe longitudinal de la bande.

Avantageusement, côté anodes, la bande porteuse est recouverte d'une couverture élastomère pourvue de canaux longitudinaux de passage de l'hydrogène.

La bande est avantageusement réalisée à partir de deux feuillards dans lesquels est formée une succession de fenêtres de retenue de cellules unitaires et pourvus de fentes de passage de bandelettes formant couches de diffusion gazeuse et liaisons électriques entre des anodes et des cathodes successives.

Les feuillards sont avantageusement formés d'un polymère thermoplastique imperméable aux gaz et assemblés l'un sur l'autre pour enserrer les cellules unitaires.

Les bandelettes sont préférablement réalisées à partir d'un matériau polymère tissé ou non pourvu d'un traitement hydrophobe.

Les bandelettes sont avantageusement métallisées pour transporter le courant entre les anodes et les cathodes.

Selon un mode de réalisation avantageux de l'invention, les bandelettes passent d'un côté à l'autre de la bande au niveau des fentes de passage, une colle ou un film adhésif thermoplastique refermant les fentes de manière imperméable aux gaz.

L'invention concerne en outre un convertisseur électrochimique caractérisé en ce qu'il comporte une bande porteuse de cellules électrochimiques unitaires, des bandelettes reliant les anodes et cathodes successives desdites cellules mises ainsi en série, une couverture élastomère munie de passages dans une direction longitudinale de la bande d'un côté de la bande pourvu des anodes, un film ondulé dont les ondulations sont alignées de manière transversale à la bande, ladite bande, ladite couverture et ledit film étant enroulés en spirale en sorte de former un convertisseur électrochimique compact cylindrique pour lequel l'alimentation en air se fait dans une direction parallèle à l'axe du cylindre, le film ondulé formant une barrière de séparation d'air de refroidissement et d'air d'alimentation des cathodes.

L'invention concerne en outre un procédé de fabrication d'un convertisseur électrochimique cylindrique comportant un élément de convertisseur réalisé à partir d'une bande portant une pluralité de cellules électrochimiques unitaires, des bandelettes de connexion des anodes et cathodes adjacentes, comportant en outre des moyens de séparation d'un flux d'air en deux parties côté cathodes des cellules unitaires sous forme d'un film ondulé et comportant un moyen d'alimentation des anodes des cellules en hydrogène sous forme d'une couverture munie de canaux longitudinaux caractérisé en ce qu'on assemble les cellules sur la bande, on insère les bandelettes dans la bande et on les applique sur les faces des cellules, on applique la couverture sur la bande côté anodes, on dispose le film ondulé sur le côté de la couverture élastomère opposé aux canaux longitudinaux puis on enroule la bande recouverte de la couverture et du film ondulé sur elle même de sorte qu'une face du film ondulé vienne en contact avec la face de la bande portant les cathodes.

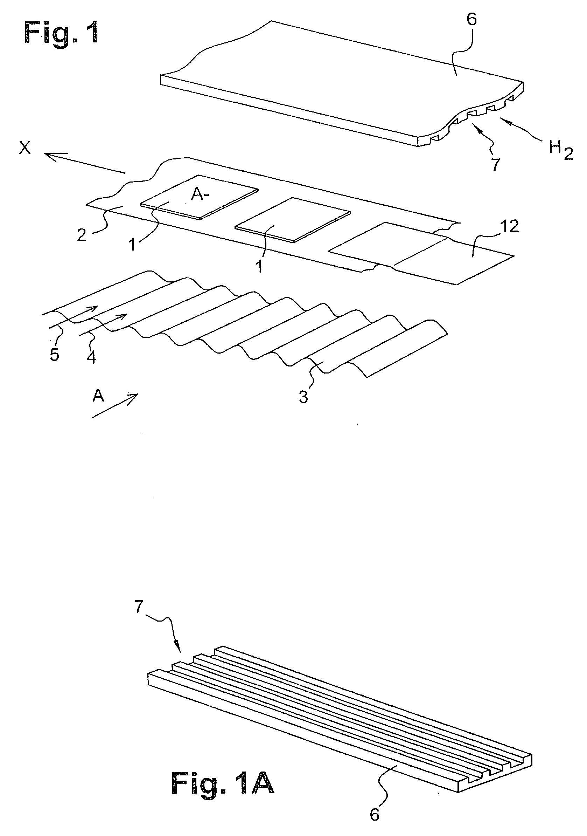

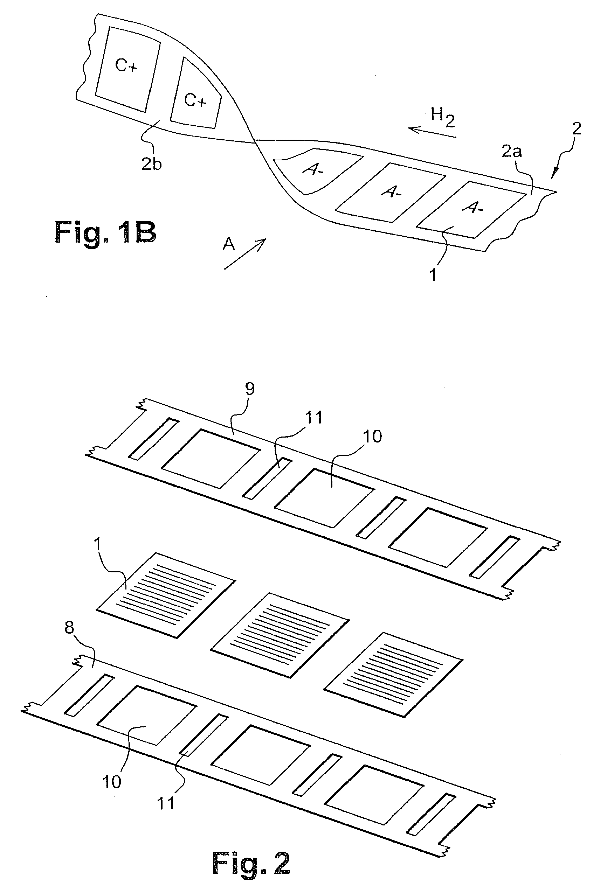

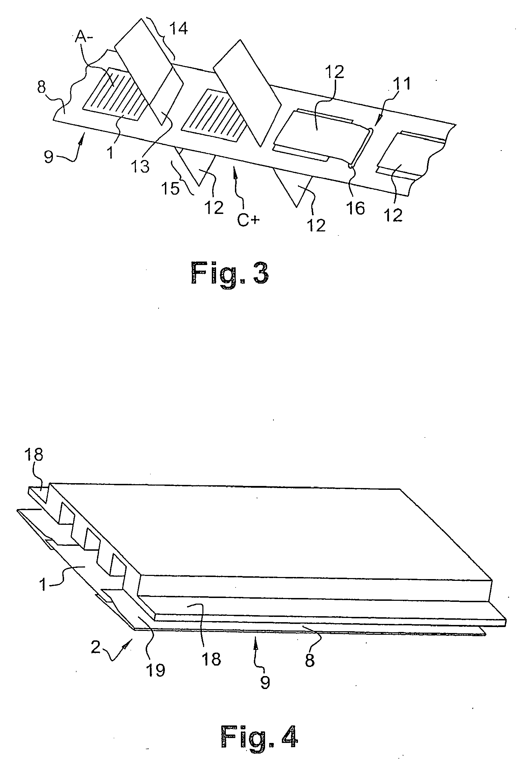

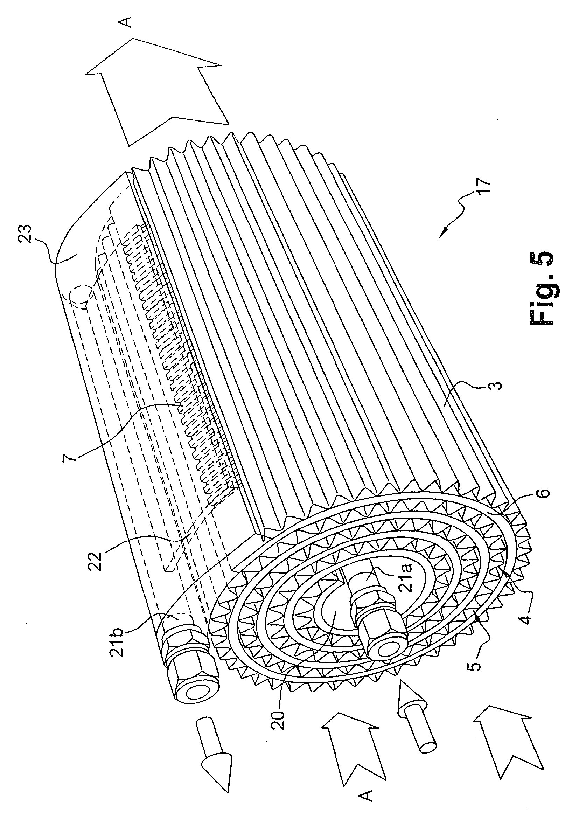

D'autres caractéristiques et avantages de l'invention seront apparents à la lecture de la description qui suit d'un exemple non limitatif de réalisation de l'invention accompagné des dessins qui représentent:
- en figure 1:: une vue en perspective d'un détail d'un exemple de réalisation d'un convertisseur selon l'invention;
- en figure 1A:: une vue en perspective de dessous d'une couverture selon l'invention;
- en figure 1B:: une vue en perspective de la bande de la figure 1 vrillée;
- en figure 2:: une vue en éclaté d'une bande de maintien de cellules de l'invention selon une première étape de montage;
- en figure 3:: une vue en perspective de la bande de maintien de la figure 2 selon une seconde étape de montage;
- en figure 4:: une vue en perspective d'une étape d'assemblage de la bande de la figure 3 avec une couverture de l'invention;
- en figure 5:: une vue en perspective d'un convertisseur cylindrique selon l'invention;

La figure 1 représente un élément de convertisseur électrochimique à membrane protonique réalisé selon l'invention qui comporte une pluralité de cellules électrochimiques unitaires 1 reliées en série et disposées sur une bande porteuse 2 s'étendant selon un axe longitudinal.

Comme représenté en figure 1B où l'on a vrillé la bande 2 pour en représenter le dessus et le dessous, une première face 2a de la bande porteuse présente des anodes A- et reçoit de l'hydrogène H₂ et une seconde face 2b de la bande présente des cathodes C+ et reçoit de l'air A.

L'hydrogène circule selon un flux parallèle à l'axe longitudinal X de la bande porteuse 2 et l'air circule selon un flux transversal à l'axe longitudinal de cette bande.

Selon l'invention, des moyens de séparation repérés 3 sur la figure 1 divisent le flux d'air deux parties à savoir en un flux de refroidissement 4 sans contact avec les cathodes et un flux de réaction cathodique 5 en contact avec les cathodes C+.

Ceci a l'avantage d'augmenter le flux d'air global sans augmenter le ratio stoechiométrique.

Ces moyens de séparation 3 sont constitués selon l'exemple par un film ondulé dont les ondulations sont disposées perpendiculairement à l'axe longitudinal X de la bande porteuse.

Il est à noter que le flux de réaction cathodique participe au refroidissement.

Ainsi les flux partiels 4 et 5 participent au refroidissement, par contre seul le flux 5 participe à la réaction cathodique.

Ceci permet d'améliorer le refroidissement de la pile sans trop augmenter le flux d'air cathodique, ce qui poserait des problèmes de déséquilibre hydrique au niveau de l'électrolyte et pourrait causer un assèchement par sur-ventilation.

Le moyen de séparation de l'invention permet de faire varier le ratio (débit air de réaction)/(débit air de refroidissement) en faisant varier la géométrie de la bande ondulée, par exemple en réalisation des ondulations asymétriques aménageant une section passante plus importante d'un côté que de l'autre.

L'intérêt d'utiliser un film ondulé est sa simplicité de mise en oeuvre du fait que les ondulations forment naturellement des moyens de séparation de couches lorsque l'on empile des couches de cellules ou lorsque l'on enroule la bande portant les cellules comme dans la présente réalisation.

Le film ondulé peut notamment être réalisé dans un matériau plastique PET d'épaisseur de l'ordre de 1/4 de mm ou entre 1/5 à 1/3 de mm .

Les ondulations ou cannelures sont formées à chaud par le passage du film dans un outil de formage.

Les ondulations sont adaptées à résister à un écrasement lors de la réalisation d'empilements de couches de cellules ou d'enroulements de bandes pour réaliser un convertisseur complet.

Côté anodes, la bande porteuse portant la succession de cellules électrochimiques unitaires est recouverte d'une couverture élastomère 6 pourvue de canaux longitudinaux 7 de passage de l'hydrogène.

La couverture élastomère est d'une épaisseur de l'ordre de 1 mm, par exemple entre 0,8 et 1,2 mm.

Les canaux longitudinaux sont sous forme de rainures de 0,5 à 2 mm de large et de profondeur de l'ordre de 0,5 à 1 mm.

Cette couverture élastomère est de largeur équivalente à la largeur de la bande portant les cellules unitaires, est réalisée dans un matériau tel qu'une silicone, un EPDM, un polyisobutylène, un polyéthylène acrylique ou chlorosulfoné, et est fixée par collage ou par laminage à chaud sur les bords de la bande de manière étanche pour former un moyen de canalisation dans lequel circule l'hydrogène.

La figure 4 donne un exemple de réalisation pour lequel la couverture est pourvue d'ailes latérales 18 destinées à être collées sur les bords 19 de la bande comportant les cellules 1 et formée par collage des feuillards 8 et 9.

La bande constituant un premier substrat est selon l'exemple de la figure 2 réalisée à partir de deux feuillards 8, 9 poinçonnés ou découpés pour former une succession de fenêtres 10 de retenue des cellules unitaires 1 et pourvus de fentes 11 de passage de bandelettes 12 formant couches de diffusion gazeuse et liaisons électriques entre des anodes et des cathodes successives.

L'épaisseur de la bande finie se situe dans une fourchette de 50 à 150 micromètres, les feuillards étant réalisés dans un matériau thermoplastique isolant et notamment un polymère thermoplastique imperméable aux gaz, les feuillards étant assemblés l'un sur l'autre pour enserrer les cellules unitaires 1 comme connu par exemple dans le document US2004/0112532 A1.

Pour relier en série les cellules unitaires il est nécessaire de traverser la bande, les anodes et les cathodes étant sur des faces opposées de cette dernière.

La figure 3 illustre la pose des bandelettes 12 qui sont insérées dans les fentes 11 puis appliquées sur les électrodes sur et sous la bande.

Les bandelettes 12 passent d'un côté à l'autre de la bande au niveau des fentes de passage 11.

Pour terminer l'assemblage des bandelettes, une colle ou un film adhésif thermoplastique 16 referme les fentes de manière imperméable aux gaz.

On utilise pour ce faire par exemple une résine polymérisant en température et/ou aux ultraviolets ou on utilise un film adhésif thermoplastique.

L'ensemble doit rester flexible après collage pour permettre l'enroulement de la bande en spirale.

Les résines employées de type sans solvant peuvent être des silicones, des acrylates, des uréthanes ou des résines époxy modifiées.

On préférera les résines époxy ou silicone en raison de leur plus grande résistance aux conditions d'acidité et d'humidité de cette application.

Pour imprégner de manière parfaitement étanche le textile des bandelettes, permettre une rapidité de collage et obtenir une bonne adhérence, la viscosité des résines peut être comprise entre 0,3 et 50 Pa.s.. La viscosité optimale dépend de l'épaisseur et de la densité de fibres du textile.

Dans le cas où on utilise un film thermoplastique, ce dernier peut être choisi parmi la famille des polyoléfines modifiées, des polyesters, des polyamides, des polyétheramides.

Il peut être appliqué sous pression ou à chaud.

Les bandelettes 12 réalisant ces traversées ont une double fonction, laisser passer les gaz vers les électrodes et conduire le courant d'une électrode à une autre.

Ces bandelettes sont réalisées à partir d'un matériau polymère, tissé ou non, pourvu d'un traitement hydrophobe.

Le polymère peut être à base de polyamide, de polyester, d'aramide, ou d'une combinaison tissée de ces matériaux.

Les propriétés intrinsèques de ce matériau sont choisies en fonction de son double rôle de piste de connexion et de couche de diffusion gazeuse dans une pile à combustible, à savoir une densité de fibres garantissant un bon compromis entre une perméabilité aux gaz et une conductivité électrique élevées après une étape de métallisation du matériau.

Pour la conductivité électrique, les bandelettes 12 sont métallisées pour assurer la liaison entre leurs zones 14, 15 de contact avec les anodes et les cathodes.

Les bandelettes sont en outres revêtues d'un matériau hydrophobe par exemple comportant un polymère thermoplastique élastomère destiné à conférer au substrat des propriétés partiellement hydrophobes qui permettront l'évacuation de l'eau générée par la pile en fonctionnement.

Le revêtement hydrophobe peut comporter un matériau poreux conducteur à base de carbone.

Il peut alternativement être complété par un dépôt de surface comportant un matériau conducteur poreux à base de carbone.

La figure 5 schématise un convertisseur électrochimique en spirale qui comporte une bande porteuse de cellules électrochimiques unitaires dont des bandelettes relient les anodes et cathodes successives pour que les cellules soient mises en série, une couverture élastomère 6 munie de passages 7 dans une direction longitudinale de la bande d'un côté de la bande pourvu des anodes, un film ondulé 3, du côté de la bande portant les cathodes, dont les ondulations sont alignées de manière transversale à la bande 2, ladite bande, ladite couverture 6 et ledit film 3 étant enroulés en spirale en sorte de former un convertisseur électrochimique compact cylindrique 17.

L'alimentation en air A du convertisseur se fait dans une direction parallèle à l'axe du cylindre, le film ondulé formant une barrière de séparation d'air de refroidissement 4 et d'air d'alimentation des cathodes 5.

Le circuit d'hydrogène H₂ est réalisé à partir de tubulures d'arrivée 21 a et de départ 21 b, ces tubulures étant mises en communication avec les passages 7 par des conduits 22 reliant une fente réalisée dans la tubulure et l'extrémité de la couverture 6.
la tubulure de sortie d'hydrogène, le conduit de sortie de forme plane et la fin de la couverture sont recouverts par un cache 23, par exemple réalisé avec une résine ou un produit tel qu'un mastic d'étanchéité.

Du côté de l'entrée d'hydrogène dans l'axe du cylindre formé par la pile enroulée, le raccordement de la tubulure 21a peut se faire par un conduit souple, l'espace central de la pile étant éventuellement comblé avec un matériau de remplissage.

Pour fabriquer un tel convertisseur, on assemble les cellules sur la bande par exemple comme vu plus haut en emprisonnant les cellules entre deux feuillards munis de fenêtres, on insère les bandelettes dans la bande au niveau de fentes réalisées dans cette dernière et on les applique sur les faces des cellules, on applique la couverture 6 sur la bande côté anodes, on dispose le film ondulé sur le côté de la couverture élastomère opposé aux canaux longitudinaux puis on enroule la bande recouverte de la couverture et du film ondulé sur elle même ou sur un mandrin de sorte qu'une face du film ondulé vienne en contact avec la face de la bande portant les cathodes.

Enrouler la pile sur elle même apporte une certaine compacité et offre un facteur de forme plus propice à une intégration dans un système.

En outre, enrouler la pile sur elle-même favorise une homogénéité thermique entre les différentes cellules, la chaleur générée par la réaction électrochimique du côté cathodique se propageant d'une cellule à l'autre par contact entre les différentes strates de la bobine formée.

Pour terminer le convertisseur, on connecte électriquement les cellules extrêmes de la bande à des contacts de sortie, on place un embout d'alimentation en hydrogène sur la terminaison des canaux longitudinaux 7 externe à l'enroulement, un embout de récupération d'hydrogène au niveau de l'axe central ou du mandrin 20 du convertisseur que l'on place dans un tube dont les extrémités servent respectivement d'arrivée et de sortie d'air.

## Revendications

1. - Convertisseur électrochimique à membrane protonique comportant une pluralité de cellules électrochimiques unitaires (1) reliées en série et disposées sur une bande porteuse allongée selon un axe longitudinal (2) dont une première face (2a) présentant des anodes (A-) reçoit de l'hydrogène (H₂) et dont une seconde face (2b) présentant des cathodes (C+) reçoit de l'air (A), **caractérisé en ce que** l'hydrogène circule selon un flux parallèle à l'axe longitudinal (X) de ladite bande (2) et **en ce que** de l'air circule selon un flux transversal à l'axe longitudinal de ladite bande, des moyens de séparation (3) divisant le flux d'air en un flux de refroidissement (4) sans contact avec les cathodes et un flux de réaction cathodique (5) en contact avec les cathodes (C+).

2. - Convertisseur électrochimique selon la revendication 1 **caractérisé en ce que** les moyens de séparation (3) sont constitués par un film ondulé dont les ondulations sont disposées perpendiculairement à l'axe longitudinal (X) de la bande.

3. - Convertisseur électrochimique selon la revendication 1 ou 2 **caractérisé en ce que** côté anodes, la bande porteuse est recouverte d'une couverture élastomère (6) pourvue de canaux longitudinaux (7) de passage de l'hydrogène.

4. - Convertisseur électrochimique selon la revendication 1, 2 ou 3 **caractérisé en ce que** côté anodes, la bande porteuse est recouverte d'une couverture polymère (6) réalisée dans un matériau choisi parmi une silicone, un EPDM, un polyisobutylène, un polyéthylène acrylique ou chlorosulfoné et est pourvue de canaux longitudinaux (7) de passage de l'hydrogène.

5. - Convertisseur électrochimique selon l'une quelconque des revendications précédentes **caractérisé en ce que** la bande porteuse est réalisée à partir de deux feuillards (8, 9) dans lesquels est formée une succession de fenêtres (10) de retenue des cellules unitaires (1) et pourvus de fentes (11) de passage de bandelettes (12) formant couches de diffusion gazeuse et liaisons électriques entre des anodes et des cathodes successives.

6. - Convertisseur électrochimique selon la revendication 5 **caractérisé en ce que** les feuillards (8, 9) sont formés d'un polymère thermoplastique imperméable aux gaz et assemblés l'un sur l'autre pour enserrer les cellules unitaires (1).

7. - Convertisseur électrochimique selon la revendication 5 ou 6 **caractérisé en ce que** les bandelettes (12) sont réalisées à partir d'un matériau polymère, tissé ou non, pourvu d'un traitement hydrophobe.

8. - Convertisseur électrochimique selon la revendication 7 **caractérisé en ce que** les bandelettes (12) sont métallisées.

9. - Convertisseur électrochimique selon l'une quelconque des revendications 5 à 8 **caractérisé en ce que** les bandelettes (12) passent d'un côté à l'autre de la bande au niveau des fentes de passage (11), une colle ou un film adhésif thermoplastique (16) refermant les fentes de manière imperméable aux gaz.

10. - Convertisseur électrochimique **caractérisé en ce qu'**il comporte une bande (2) porteuse de cellules électrochimiques unitaires (1), des bandelettes (12) reliant les anodes et cathodes successives desdites cellules mises ainsi en série, une couverture élastomère (6) munie de passages (7) dans une direction longitudinale de la bande d'un côté de la bande pourvu des anodes, un film ondulé (3) dont les ondulations sont alignées de manière transversale à la bande (2), ladite bande, ladite couverture et ledit film étant enroulés en spirale en sorte de former un convertisseur électrochimique compact cylindrique (17) pour lequel l'alimentation en air (A) se fait dans une direction parallèle à l'axe du cylindre, le film ondulé formant une barrière de séparation d'air de refroidissement et d'air d'alimentation des cathodes.

11. - Procédé de fabrication d'un convertisseur électrochimique cylindrique comportant un élément de convertisseur réalisé à partir d'une bande (2) portant une pluralité de cellules électrochimiques unitaires (1), des bandelettes de connexion des anodes et cathodes adjacentes, comportant en outre un moyen d'alimentation des anodes des cellules en hydrogène sous forme d'une couverture (6) munie de canaux longitudinaux (7) **caractérisé en ce que** le convertisseur comporte des moyens (3) de séparation d'un flux d'air en deux parties côté cathodes des cellules unitaires sous forme d'un film ondulé et qu'on assemble les cellules sur la bande, on insère les bandelettes dans la bande et on les applique sur les faces des cellules, on applique là couverture sur la bande côté anodes, on dispose le film ondulé sur le côté de la couverture élastomère opposé aux canaux longitudinaux puis on enroule la bande recouverte de la couverture et du film ondulé sur elle même de sorte qu'une face du film ondulé vienne en contact avec la face de la bande portant les cathodes.

## Patentansprüche

1. Elektrochemischer Wandler mit Protonenmembran, umfassend eine Vielzahl von elektrochemischen Einheitszellen (1), die in Serie verbunden und auf einem länglichen Trägerband entlang einer Längsachse (2) angeordnet sind, von der eine erste Seite (2a), die Anoden (A-) aufweist, Wasserstoff (H₂) aufnimmt, und von der eine zweite Seite (2b), die Kathoden (C+) aufweist, Luft (A) aufnimmt, **dadurch gekennzeichnet, dass** der Wasserstoff in einem Strom parallel zur Längsachse (X) des Bandes (2) zirkuliert, und dass die Luft in einem Strom quer zur Längsachse des Bandes zirkuliert, wobei Trennungsmittel (3) den Luftstrom in einen Kühlstrom (4) ohne Kontakt mit den Kathoden und einen kathodischen Reaktionsstrom (5) in Kontakt mit den Kathoden (C+) teilt.

2. Elektrochemischer Wandler nach Anspruch 1, **dadurch gekennzeichnet, dass** die Trennungsmittel (3) von einer Wellenfolie gebildet sind, deren Wellungen senkrecht auf die Längsachse (X) des Bandes angeordnet sind.

3. Elektrochemischer Wandler nach Anspruch 1 oder 2, **dadurch gekennzeichnet, dass** anodenseitig das Trägerband mit einer Elastomerschicht (6) bedeckt ist, die mit Längskanälen (7) für den Durchgang des Wasserstoffs versehen ist.

4. Elektrochemischer Wandler nach Anspruch 1, 2 oder 3, **dadurch gekennzeichnet, dass** anodenseitig das Trägerband mit einer Polymerschicht (6) bedeckt ist, die aus einem Material besteht, das unter einem Silikon, einem EPDM, einem Polyisobutylen, einem Acryl- oder Chlorsulfon-Polyethylen ausgewählt ist, und mit Längskanälen (7) für den Durchgang des Wasserstoffs versehen ist.

5. Elektrochemischer Wandler nach einem der vorhergehenden Ansprüche, **dadurch gekennzeichnet, dass** das Trägerband aus zwei Stahlbändern (8, 9) hergestellt ist, in denen eine Aufeinanderfolge von Haltefenstern (10) der Einheitszellen (1) ausgebildet ist, und die mit Durchgangsschlitzen (11) für Streifen (12) versehen sind, die Gasdiffusionsschichten und elektrische Verbindungen zwischen aufeinanderfolgenden Anoden und Kathoden bilden.

6. Elektrochemischer Wandler nach Anspruch 5, **dadurch gekennzeichnet, dass** die Stahlbänder (8, 9) aus einem für Gase undurchlässigen thermoplastischen Polymer gebildet und aufeinander befestigt sind, um die Einheitszellen (1) zu umspannen.

7. Elektrochemischer Wandler nach Anspruch 5 oder 6, **dadurch gekennzeichnet, dass** die Streifen (12) aus einem gewebten oder nicht gewebten Polymermaterial, das mit einer hydrophoben Behandlung versehen ist, hergestellt sind.

8. Elektrochemischer Wandler nach Anspruch 7, **dadurch gekennzeichnet, dass** die Streifen (12) metallisiert sind.

9. Elektrochemischer Wandler nach einem der Ansprüche 5 bis 8, **dadurch gekennzeichnet, dass** die Streifen (12) von einer Seite des Bandes zur anderen im Bereich der Durchgangsschlitze (11) reichen, wobei ein Klebstoff oder eine thermoplastische Haftfolie (16) die Schlitze gasdicht verschließt.

10. Elektrochemischer Wandler, **dadurch gekennzeichnet, dass** er ein Trägerband (2) von elektrochemischen Einheitszellen (1), Streifen (12), die die aufeinanderfolgenden Anoden und Kathoden der so in Serie geschalteten Zellen verbinden, eine Elastomerschicht (6), die mit Durchgängen (7) in eine Längsrichtung des Bandes auf einer Seite des mit Anoden versehenen Bandes versehen ist, eine Wellenfolie (3), deren Wellungen quer zum Band (2) ausgerichtet sind, umfasst, wobei das Band, die Schicht und die Folie spiralförmig gewickelt sind, um einen kompakten zylindrischen elektrochemischen Wandler (17) zu bilden, bei dem die Luftversorgung (A) in eine Richtung parallel zur Achse des Zylinders erfolgt, wobei die Wellenfolie eine Schranke zur Trennung von Kühlluft und Versorgungsluft der Kathoden bildet.

11. Verfahren zur Herstellung eines zylindrischen elektrochemischen Wandlers, umfassend ein Wandlerelement, bestehend aus einem Band (2), das eine Vielzahl von elektrochemischen Einheitszellen (1) trägt, Anschlussstreifen der aneinandergrenzenden Anoden und Kathoden, ferner umfassend ein Mittel zur Versorgung der Anoden der Zellen mit Wasserstoff in Form einer Schicht (6), die mit Längskanälen (7) versehen ist, **dadurch gekennzeichnet, dass** der Wandler Mittel (3) zur Trennung eines Luftstroms in zwei Teile auf der Kathodenseite der Einheitszellen in Form einer Wellenfolie umfasst, und dass die Zellen auf dem Band befestigt werden, dass die Streifen in das Band eingesetzt und an die Seiten der Zellen angelegt werden, dass die Schicht an das Band anodenseitig angelegt wird, die Wellenfolie auf der Seite der Elastomerschicht gegenüber den Längskanälen angeordnet und dann das mit der Schicht und der Wellenfolie bedeckte Band um sich selbst gewickelt wird, so dass eine Seite der Wellenfolie mit der Seite des Bandes, die die Kathoden trägt, in Kontakt kommt.

## Claims

1. Proton exhange membrane electrochemical converter including a plurality of unitary electrochemical cells (1) that are connected in series and arranged on a carrier strip that is elongate along a longitudinal axis (2), a first face (2a) of which having anodes (A-) receives hydrogen (H₂) and a second face of which (2b) having cathodes (C+) receives air (A), **characterized in that** the hydrogen flows in a stream parallel to the longitudinal axis (X) of said strip (2) and **in that** the air flows in a stream transverse to the longitudinal axis of said strip, separating means (3) dividing the air stream into a cooling stream (4) not making contact with the cathodes and a cathodic reaction stream (5) that makes contact with the cathodes (C+).

2. Electrochemical converter according to Claim 1, **characterized in that** the separating means (3) consist of a corrugated film the corrugations of which are arranged perpendicularly to the longitudinal axis (X) of the strip.

3. Electrochemical converter according to Claim 1 or 2, **characterized in that** anodes-side, the carrier strip is covered with an elastomer cover (6) provided with longitudinal channels (7) for passing hydrogen.

4. Electrochemical converter according to Claim 1, 2, or 3, **characterized in that** anodes-side, the carrier strip is covered with a polymer cover (6) produced from a material chosen from a silicone, an EPDM, a polyisobutylene or a chlorosulfonated or acrylic polyethylene, and is provided with longitudinal channels (7) for passing hydrogen.

5. Electrochemical converter according to any one of the preceding claims, **characterized in that** the carrier strip is produced from two bands (8, 9) in which are formed a succession of windows (10) for retaining the unitary cells (1), said bands furthermore being provided with slits (11) for passing striplets (12) forming gas diffusion layers and electrical connections between successive anodes and cathodes.

6. Electrochemical converter according to Claim 5, **characterized in that** the bands (8, 9) are formed from a thermoplastic polymer that is impermeable to the gases and joined to each other in order to hold the unitary cells (1) fast.

7. Electrochemical converter according to Claim 5 or 6, **characterized in that** the striplets (12) are produced from an optionally woven polymer provided with a hydrophobic treatment.

8. Electrochemical converter according to Claim 7, **characterized in that** the striplets (12) are metallised.

9. Electrochemical converter according to any one of Claims 5 to 8, **characterized in** the striplets (12) pass from one side to the other of the strip through passing slits (11), an adhesive or a thermoplastic adhesive film (16) sealing the slits with a gas-tight seal.

10. Electrochemical converter, **characterized in that** it includes a strip (2) bearing unitary electrochemical cells (1), striplets (12) connecting the successive anodes and cathodes of said cells, which are thus series connected, an elastomer cover (6) equipped with passages (7) in a longitudinal direction of the strip on a side of the strip provided with anodes, and a corrugated film (3) the corrugations of which are aligned transversely to the strip (2), said strip, said cover and said film being wound in a spiral so as to form a compact cylindrical electrochemical converter (17) to which air (A) is supplied in a direction parallel to the axis of the cylinder, the corrugated film forming a barrier for separating cooling air and the air supply of the cathodes.

11. Process for manufacturing a cylindrical electrochemical converter including a converting element produced from a strip (2) bearing a plurality of unitary electrochemical cells (1) and striplets for connecting adjacent anodes and cathodes, said converter furthermore including a means for supplying the anodes of the cells with hydrogen, taking the form of a cover (6) equipped with longitudinal channels (7), **characterized in that** the converter includes means (3) for separating an air stream into two portions on the side of the cathodes of the unitary cells, taking the form of a corrugated film, and the cells are installed in the strip, the striplets are inserted into the strip and applied to the faces of the cells, the cover is applied to the strip anodes-side, the corrugated film is arranged on that side of the elastomer cover which is opposite the longitudinal channels then the strip covered with the cover and the corrugated film is wound about itself so that one face of the corrugated film makes contact with the face of the strip bearing the cathodes.
